# FASCICULE DE BREVET EUROPEEN

(11) **EP 0 939 292 B1**
(45) Date de publication et mention de la délivrance du brevet: **28.11.2001**
(21) Numéro de dépôt: 99470007.8
(22) Date de dépôt: 25.02.1999
(51) Int. Cl.: G01B 7/06

(54) **Dispositif et procédé de mesure en continu de l'usure d'une paroi de récipient métallurgique**
Vorrichtung und Verfahren zur kontinuierlichen Messung der Wandabnutzung eines metallischen Behälters
Device and method for continuously measuring the wear of a wall of a metallurgical vessel

(30) Priorité: 27.02.1998 FR 9802575
(43) Date de publication de la demande: 01.09.1999
(73) Titulaire: SOLLAC, 92800 Puteaux (FR)
(72) Inventeur: Baconnier, Franck, 57000 Metz (FR); Dez, Anne, 57000 Metz (FR); Grisvard, Claude, 57000 Metz (FR); Pernet, Daniel, 57000 Metz (FR)
(74) Mandataire: Ballot, Paul Denis Jacques

(56) Documents cités:
- EP-A- 0 363 902
- EP-A- 0 764 837
- WO-A-93/04504
- FR-A- 2 008 582
- FR-A- 2 504 420
- FR-A- 2 728 336
- US-A- 5 158 366
- US-A- 5 711 608
- PATENT ABSTRACTS OF JAPAN vol. 018, no. 031 (P-1677), 18 janvier 1994 & JP 05 264366 A (DAIDO STEEL CO LTD), 12 octobre 1993
- PATENT ABSTRACTS OF JAPAN vol. 009, no. 041 (C-267), 21 février 1985 & JP 59 185713 A (KAWASAKI SEITETSU KK), 22 octobre 1984
- PATENT ABSTRACTS OF JAPAN vol. 011, no. 282 (C-446), 11 septembre 1987 & JP 62 080216 A (SUMITOMO METAL IND LTD), 13 avril 1987

## Description

La présente invention concerne de manière générale la mesure de l'usure des parois de récipients métallurgiques, étant entendu ici que le terme paroi désigne tout corps en. matière réfractaire susceptible de se consommer progressivement au contact de métal en fusion contenu dans le dit récipient. L'invention peut donc s'appliquer pour mesurer l'usure en continu d'un revêtement réfractaire, mais aussi pour mesurer l'usure d'organes implantés dans un revêtement réfractaire, par exemple l'usure de tuyères de soufflage d'oxygène dans un convertisseur, ou l'usure d'éléments de soufflage d'un gaz de brassage, ou l'usure d'électrodes de sole d'un four à arcs électriques.

Dans l'exemple de tuyères, celles-ci sont disposées dans le revêtement du convertisseur et traversant sa paroi servent à injecter un fluide de traitement, par exemple de l'oxygène, dans le métal en fusion, lequel est donc pendant ce traitement au contact des tuyères. Il s'ensuit que l'érosion des réfractaires est particulièrement élevée au voisinage des zones d'injection de gaz ou de liquide dans le récipient, c'est à dire à l'extrémité des tuyères d'injection. Il est donc particulièrement souhaité de surveiller le plus précisément possible l'évolution de cette usure, en particulier pour tenir compte de son influence sur les paramètres d'injection de fluide, mais surtout pour éviter les risques de percées, d'autant plus que l'évolution de l'usure du réfractaire des tuyères ou à proximité de celles-ci est difficile à prévoir.

Il a donc été depuis longtemps envisagé de mesurer l'usure des réfractaires, en mesurant en fait la variation de l'épaisseur de la paroi subsistante.

Une technique ancienne consistait à implanter dans le matériau réfractaire du revêtement ou des tuyères une pluralité de thermocouples décalés dans la direction de propagation de l'usure, c'est à dire pratiquement étagés selon l'épaisseur du réfractaire. Cette technique a par exemple été utilisée pour des tuyères formées d'éléments réfractaires perméables de type dit LBE comme indiqué dans le document FR-A-2 518 240. L'évolution de l'usure était suivie en observant les signaux fournis par les différents thermocouples implantés dans un même élément perméable, une brusque variation du signal signalant l'arrivée du métal liquide au contact de la pointe du thermocouple, suite à l'usure du réfractaire l'enrobant. Le suivi de l'usure s'effectuait nécessairement de manière discrète, un nouveau signal n'apparaissant que suite à l'usure d'une épaisseur de réfractaire correspondant au décalage entre deux thermocouples.

Plus récemment, des fabricants ont proposé des dispositifs visant à effectuer une mesure en continu. Le principe de mesure utilisé dans ces dispositifs est de mesurer en continu la résistance électrique d'un fil résistif placé dans le matériau réfractaire, dans la direction de l'épaisseur. L'usure du réfractaire s'accompagne d'une diminution de longueur du fil résistif et donc de sa résistance. La mesure de la résistance permet donc de suivre la variation d'épaisseur résultant de l'érosion du réfractaire. Dans la pratique, le dispositif utilisé pour mesurer en continu la longueur d'une tuyère d'injection, tel que décrit par exemple dans le document FR-A-2728336, est une sonde constituée par deux conducteurs électriques s'étendant parallèlement et isolés entre eux par un matériau réfractaire électriquement isolant. Les deux conducteurs sont reliés à des moyens de mesure de résistance électrique aptes à mesurer les variations de résistance résultant des variations de longueur des conducteurs lors de l'usure du revêtement réfractaire, le circuit se bouclant via le métal en fusion contenu dans le récipient métallurgique. L'un au moins des deux conducteurs est en un matériau ayant des caractéristiques de résistivité suffisantes pour permettre une mesure fiable et suffisamment précise. On notera qu'une telle sonde est essentiellement utilisée pour mesurer l'usure au niveau des tuyères d'injection de fluide, car le mouvement du métal fondu au voisinage de l'extrémité de la tuyère est pratiquement nécessaire pour empêcher le dépôt de laitier, isolant électrique; sur la paroi, et donc pour assurer la liaison électrique entre les extrémités des deux conducteurs.

Selon un mode de réalisation préférentiel décrit dans le document précité, la sonde est réalisée sous la forme d'un câble de type coaxial comportant un conducteur central entouré d'une gaine isolante en matériau réfractaire électriquement isolant, tel que de l'alumine, elle-même entourée d'une gaine métallique, par exemple en acier ou en Inconel ® , servant de deuxième conducteur et consolidant mécaniquement la sonde. Le conducteur central, par exemple en un matériau à base d'acier au bisiliciure de molybdène, présente une résistance linéaire spécifique largement supérieure à celle de la gaine métallique, par exemple de l'ordre de 45 Ohms par mètre.

Le mode de fabrication actuel conduit à une sonde dont le diamètre extérieur est voisin de 1,5 mm et dont la gaine isolante en alumine, réalisée sous forme d'éléments tubulaires placés à l'intérieur du tube métallique, présente une épaisseur relativement importante, de l'ordre de plusieurs dixièmes de millimètres. Les sondes ainsi réalisées sont peu flexibles et parfois mal adaptées à des implantations dans des endroits difficiles d'accès, comme les tuyères de convertisseurs par exemple. Par ailleurs, il en résulte une distance, entre le conducteur central et la gaine métallique extérieure, telle que le pontage électrique, entre les extrémités de ces éléments, peut ne pas toujours être correctement assuré par le métal contenu dans le récipient, ce qui induit des erreurs de mesure de la résistance, des variations importantes de la résistance électrique pouvant résulter de cette mauvaise conduction sans qu'il y ait variation de la longueur du conducteur central.

Dans le cas où on souhaiterait mesurer l'usure du réfractaire dans une zone du récipient comportant un revêtement réfractaire continu, il peut même être impossible d'utiliser une telle sonde, du fait d'une coupure quasi permanente de la liaison électrique entre les deux conducteurs de la sonde, coupure due à la pellicule de laitier isolant qui couvre la surface des briques réfractaires.

Par ailleurs, le document US-A-5158366 décrit une méthode de mesure de l'érosion d'un réfractaire, au moyen d'un capteur comportant des conducteurs électriques séparés par une substance dont la résistance d'isolation varie lorsque le capteur est porté à une température élevée, représentative d'une usure du réfractaire dans lequel le capteur est placé. La détection d'une usure est indirecte, résultant de la seule mesure d'une variation, en fonction de la température, de la résistance d'isolation entre les conducteurs électriques de la sonde.

Le document JP-A-62080216 décrit un procédé de détection de l'usure d'un revêtement réfractaire par mesure d'une variation de résistance lorsque l'extrémité d'un thermocouple implanté dans le revêtement arrive au contact du métal liquide contenu dans le récipient suite à l'usure du dit revêtement. Cette variation brusque provoque une alarme, mais on ne peut suivre en continu l'usure.

La présente invention a pour but de résoudre ces problèmes et vise en particulier à fournir une sonde de mesure fiable, facilement implantable même dans des endroits difficiles d'accès, et permettant de plus des mesures plus précises. Elle vise aussi, dans un mode de réalisation, à permettre une mesure de l'usure du réfractaire, même dans le cas où la surface intérieure du revêtement viendrait à se couvrir d'une couche isolante. Elle vise encore, en complément, dans un autre mode de réalisation, à permettre une mesure de température au niveau de la surface de paroi où est implantée la dite sonde.

Avec ces objectifs en vue, l'invention a pour objet un dispositif de mesure en continu de l'usure d'une paroi de récipient métallurgique, comportant :
- une sonde qui comprend au moins deux éléments électriquement conducteurs qui s'étendent sensiblement parallèlement à faible distance l'un de l'autre,
- une gaine tubulaire, qui peut constituer l'un des dits éléments et dans laquelle le ou les autres éléments s'étendent en étant isolés l'un de l'autre et de la dite gaine par un isolant réfractaire, la dite sonde étant adaptée pour être implantée transversalement dans la dite paroi, les deux éléments ayant une première extrémité affleurant sensiblement à la surface intérieure de la dite paroi, et
- des moyens de mesure connectés aux extrémités opposées des dits éléments, pour mesurer une caractéristique électrique du circuit formé par les dits éléments, cette caractéristique électrique étant dépendante de la longueur des dits éléments,
caractérisé en ce que la sonde a un diamètre inférieur à 1 mm, obtenu par un étirage global des différents éléments qui la constituent, après que ces éléments aient été assemblés sous une forme intermédiaire dans laquelle leur section est supérieure à leur section finale.

Préférentiellement, le diamètre de la sonde est inférieur à 0,5 mm, et préférentiellement encore, inférieur ou égal à 0,2 mm.

La sonde selon l'invention a donc un diamètre nettement plus faible que les sondes connues, ce qui facilite sa mise en place dans des endroits d'accès difficile.

Selon un premier mode de réalisation, adapté particulièrement à la mesure de l'usure des tuyères, l'un au moins des deux dits éléments est réalisé en un matériau ayant une résistivité élevée, et les moyens de mesure sont des moyens de mesure de résistance électrique, pour mesurer la résistance du circuit formé par les dits éléments et bouclé au niveau des premières extrémités par le métal contenu dans le récipient. Par l'expression résistivité élevée, on doit comprendre que la résistivité du matériau doit être suffisante pour que les variations de longueur des conducteurs conduisent à des variations de résistance électrique sensibles et mesurables avec une précision suffisante.

Dans ce mode de réalisation, le principe général de la mesure est similaire à ce qui a été décrit préalablement en relation avec les systèmes connus. L'avantage essentiel de l'invention résulte de la faible distance entre les conducteurs, garante d'une bonne continuité du circuit au niveau des extrémités des conducteurs en contact avec le métal en fusion.

L'invention a aussi pour objet un procédé de mesure en continu de l'usure d'une paroi de récipient métallurgique utilisant le mode de réalisation ci dessus, et tel que défini dans la revendication 8.

Le matériau à résistivité élevée est choisi de manière que, après étirage, ses caractéristiques électriques soient sensiblement constantes sur toute la longueur de l'élément réalisé en ce matériau. Autrement dit, on choisira un matériau ayant des propriétés mécaniques favorables à une déformation homogène par étirement, tel que par exemple du chromel ou alumel, matériau par ailleurs classiquement utilisés pour la réalisation de thermocouples.

Préférentiellement encore, les matériaux constitutifs des éléments conducteurs seront choisis parmi des matériaux ayant une résistivité sensiblement constante en fonction de la température, ou tout au moins ne présentant pas de forte variation dans la gamme de températures visée par l'application du dispositif. On notera à ce sujet que dans l'application particulière visée pour la mesure de l'usure des tuyères de convertisseurs, la température est certes très élevée au niveau de la surface en contact avec le métal en fusion, de l'ordre de 1300 à 1500°C, mais décroît assez rapidement dans l'épaisseur du revêtement réfractaire, pour n'être plus que de l'ordre de 500°C à quelques millimètres de la surface. De plus, comme la sonde est alors implantée à proximité directe des passages du fluide injecté, elle est fortement refroidie par le dit fluide.

Le choix du matériau de l'élément résistif résultera en général d'un compromis visant à optimiser d'une part les propriétés électriques souhaitées, pour obtenir une résistance linéaire suffisamment élevée, de l'ordre de 40 à 120 ohms par mètre, ou plus, et un faible coefficient de variation de résistivité en fonction de la température, et d'autre part ses propriétés mécaniques, du point de vue de la déformabilité par étirement. On pourra par exemple utiliser, comme indiqué précédemment, un élément conducteur en chromel ou alumel, ou encore en un alliage d'acier au bisiliciure de molybdène, avantageux pour ses caractéristiques électriques, en particulier pour sa faible variation de résistivité en fonction de la température.

La gaine tubulaire est réalisée en un métal présentant essentiellement de bonnes caractéristiques de résistance mécanique, par exemple en acier, ou en Inconel ®. On notera que, comme on le verra par la suite, le matériau de la gaine pourra aussi être choisi en fonction de ses caractéristiques électriques, soit pour constituer un conducteur de retour ayant une résistance négligeable, soit pour constituer un élément résistif faisant partie du circuit de mesure.

Selon une disposition particulière, les matériaux des éléments conducteurs constitutifs du circuit de mesure seront choisis de manière à éviter le plus possible l'effet de thermocouple au niveau des extrémités situées en contact avec le métal en fusion contenu dans le récipient. Il se crée en effet à ce niveau, entre les éléments conducteurs, une liaison qui doit nécessairement être conductrice pour pouvoir boucler le circuit de mesure de la résistance et permettre d'en déduire les variations de longueur des dits éléments conducteurs. En théorie, cette liaison serait assurée simplement par le métal en fusion dans le récipient. Dans la pratique, il y a en fait une zone plus ou moins pâteuse ou figée, résultant de la combinaison de l'usure avec la fusion des conducteurs et avec le refroidissement provoqué par les gaz injectés par la tuyère, cette zone assurant une liaison directe des deux éléments conducteurs. Pour éviter toute perturbation de la mesure par un effet thermoélectrique de cette liaison, les matériaux en présence doivent être le moins possible susceptibles de générer une force électromotrice par effet Seebeck, de sorte que la mesure de résistance reflète au mieux la longueur des conducteurs.

Selon une autre disposition, on utilise au contraire un couple de matériaux apte à générer une force électromotrice d'origine thermique, la dite zone de liaison entre les extrémités des éléments conducteurs constituant une soudure chaude d'un thermocouple classique. Ceci permet, sinon de mesurer précisément la température, mais au moins d'en avoir une bonne appréciation et de pouvoir en conséquence corriger les valeurs de longueur déterminées, en tenant compte des variations de résistivité des éléments conducteurs en fonction de la température. Dans ce dernier cas, on utilisera alors la sonde pour faire alternativement et régulièrement des mesures de températures et des mesures de résistance, les résultats de la mesure de température servant à apporter une correction directe à la mesure de résistance en tenant compte de la présence, dans le circuit dont on mesure la résistance, du générateur de tension constitué par la soudure chaude du thermocouple, et servant par ailleurs à corriger la valeur de longueur calculée, en tenant compte des éventuelles variations de résistivité.

Dans le deuxième mode de réalisation, destiné particulièrement aux cas où le bouclage entre les extrémités des deux conducteurs ne peut être réalisé de manière fiable, les moyens de mesure comportent des moyens de mesure de la capacité électrique entre les deux conducteurs. Dans ce cas, une usure du réfractaire produit une diminution de la longueur des conducteurs, et donc une variation de la capacité électrique naturelle existant entre ces deux conducteurs s'étendant à proximité l'un de l'autre. On notera qu'ici aussi le faible diamètre de la sonde est particulièrement avantageux puisqu'il permet d'obtenir une très faible distance entre les conducteurs, et donc une meilleure appréciation des variations de la capacité.

L'isolant réfractaire est préférentiellement une poudre d'oxyde de magnésium, qui se trouve compactée lors de la réduction de diamètre par étirage. On notera à ce sujet que dans la sonde connue déjà évoquée, l'isolant était formé d'un manchon d'alumine, sous forme d'un capillaire fin et donc fragile et de mise en oeuvre très délicate.

La constitution de la sonde selon l'invention permet donc, simultanément avec l'obtention d'un diamètre pouvant être inférieur à 0,5 mm, d'accroître considérablement la souplesse de fabrication et d'utilisation de la sonde, permettant en particulier la réalisation de sondes de plusieurs mètres de longueur et leur implantation même dans des sites très difficiles d'accès.

Un mode de réalisation particulièrement avantageux consiste à utiliser comme sonde un thermocouple, par exemple de type chromel-alumel, qui se trouve déjà dans le commerce sous forme d'éléments de grande longueur et de faible diamètre, pouvant descendre à 0,2 mm. Disposant alors d'une sonde comportant deux éléments conducteurs résistifs placés à l'intérieur d'une gaine formant un troisième élément pouvant également être mise en oeuvre dans le circuit de mesure, diverses possibilités d'exploitation du dispositif sont envisageables et vont faire l'objet de la description qui va suivre de plusieurs exemples de réalisation et de mise en oeuvre, et au cours de laquelle d'autres caractéristiques et avantages apparaîtront.

On se reportera aux dessins annexés dans lesquels :
- la figure 1 illustre une disposition classique d'un dispositif de mesure de l'usure de la paroi, montrant l'implantation de la sonde dans le revêtement réfractaire d'un réacteur métallurgique, au niveau d'une tuyère de soufflage de gaz,
- la figure 2 est une vue de détail à plus grande échelle de la zone A de la figure 1, montrant l'extrémité de la sonde en contact avec le métal liquide et illustrant le bouclage électrique entre les extrémités des conducteurs via le métal en fusion contenu dans le réacteur,
- la figure 3 est une vue partielle à grande échelle de la sonde,
- la figure 4 est une vue schématique de la sonde et des appareillages de mesure selon un premier mode de réalisation de l'invention, utilisant une mesure de résistance
- la figure 5 illustre une variante de ce mode de réalisation,
- la figure 6 illustre le dispositif et le principe de la mesure dans le deuxième mode de réalisation, utilisant une mesure de capacité.

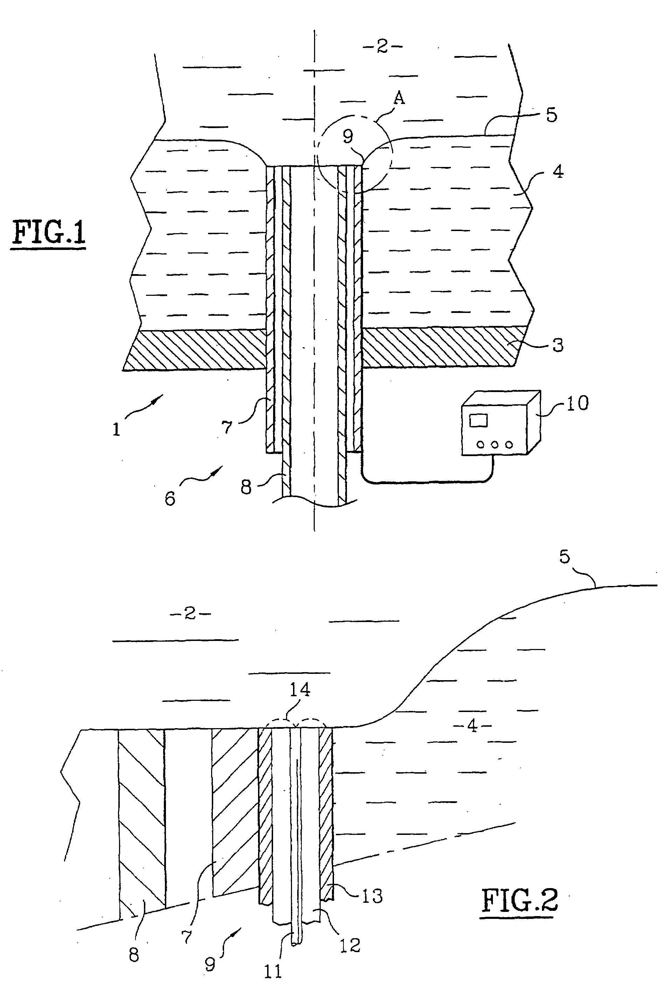

La figure 1 représente schématiquement la paroi 1 de fond d'un réacteur métallurgique, tel que par exemple un convertisseur d'aciérie, contenant du métal en fusion 2. La paroi 1 est constituée d'une carcasse métallique 3 revêtue intérieurement d'une couche 4 en matériau réfractaire dont la surface 5 est en contact avec le métal liquide. La paroi 1 est pourvue d'une pluralité de tuyères 6 adaptées pour insuffler dans le métal des fluides de traitement, par exemple de l'oxygène ou d'autres gaz.

Une telle tuyère comporte de manière classique un ou plusieurs tubes concentriques 7, 8, qui débouchent à l'intérieur du récipient sensiblement au niveau de la surface intérieure 5 du réfractaire 4.

De manière connue, la sonde 9 est disposée parallèlement à la tuyère, préférentiellement à l'extérieur de celle-ci, dans une rainure qui peut être ménagée à cet effet dans le tube extérieur 7. La sonde s'étend sur toute la longueur de la tuyère, ou au moins sur toute la longueur utile, c'est à dire de la surface interne 5 jusqu'à l'extérieur du récipient, d'où elle est reliée à un appareil de mesure 10.

La figure 2 illustre en vue de détail, à échelle très agrandie, l'extrémité d'une sonde affleurant à la surface intérieure 5 du revêtement réfractaire 4, lorsque celui-ci et la tuyère ont subi une certaine érosion conduisant à une diminution de la longueur de la sonde. Cette figure illustre aussi les lignes de courant 14 assurant la liaison électrique, via le métal en fusion 2, entre les extrémités du conducteur central 11 et du tube extérieur 13 de la sonde 9, entre lesquels est placé un isolant 12. On peut ainsi, comme cela est déjà connu, mesurer, avec l'appareil de mesure 10, la résistance du circuit formé par le conducteur central 11 et le tube 13, et en déduire leur longueur.

Les dispositions qui viennent d'être décrites sont connues de l'état de la technique. L'invention, dans son premier mode de réalisation, s'applique à ces dispositions. On notera toutefois que la rainure de positionnement de la sonde, évoquée ci-dessus, n'est toutefois pas forcément nécessaire dès lors que le diamètre de la sonde peut être, conformément à l'invention, suffisamment faible, en particulier inférieur à 0,5 mm

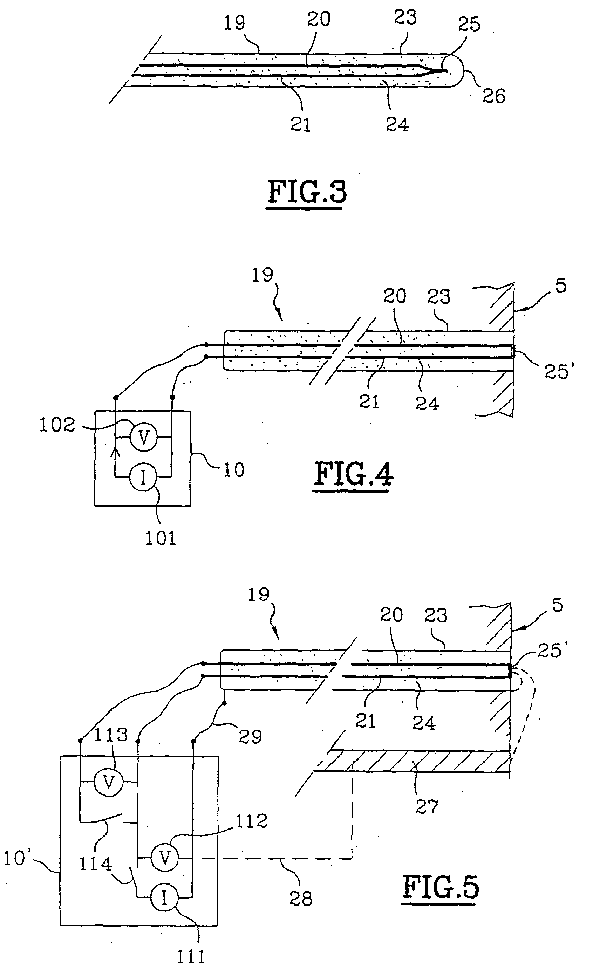

Dans un mode de réalisation préférentiel, représenté figure 3, la sonde 19 selon l'invention, est constituée par un thermocouple chromel / alumel de type classique et commercialisé sous des diamètres n'excédant pas 0,5 mm, et en grandes longueurs, de plusieurs mètres le cas échéant. Ce thermocouple comporte une gaine tubulaire 23, par exemple en acier, à l'intérieure de laquelle s'étendent parallèlement les deux fils 20, 21 formant le thermocouple proprement dit, qui sont isolés entre eux et par rapport à la gaine 23 par un isolant réfractaire tel que de l'alumine en poudre. On sait que un tel thermocouple est classiquement fabriqué en assemblant ses divers constituants indiqués ci-dessus alors qu'ils présentent une section nettement supérieure à celle qu'ils ont dans le thermocouple fini, cette section plus importante permettant le positionnement relatif des fils et de la gaine avec un écartement sensiblement constant sur toute la longueur. Puis, l'ensemble est étiré et sa section simultanément réduite jusqu'à l'obtention du diamètre souhaité pour la gaine, les conducteurs étant de même étiré et subissant une réduction de section correspondante, mais tout en conservant entre eux et par rapport à la gaine l'isolation assurée par la poudre réfractaire isolante.

Sur le dessin de la figure 3, la sonde est représentée dans un état neuf, avant toute usure. Les extrémités des fils 20 et 21 sont reliées par une soudure 25 formant la soudure chaude classique du thermocouple, la gaine 23 étant elle-même obturée à son extrémité 26 voisine de la soudure 25. La sonde peut être ainsi implantée comme la sonde 9 représentée à la figure 1.

La figure 4 illustre schématiquement le dispositif de mesure dans une première variante de son premier mode de réalisation. Les deux fils 20 et 21 de la sonde sont reliés à l'appareil de mesure 10. Celui-ci sert à mesurer la résistance du circuit électrique comportant notamment les deux fils 20, 21 qui sont reliés en série par leur extrémité 25' en contact avec le métal en fusion contenu dans le récipient. Après un certain usage ayant conduit à l'usure du revêtement réfractaire 4 et de la tuyère 6, l'extrémité 26 de la sonde a disparu, de sorte que la gaine 23 et les deux fils 20, 21 se trouvent affleurant à la surface interne 5 de la paroi, en contact avec le métal en fusion 2, de manière similaire à ce quia a été représenté figure 2. On notera par contre qu'ici, comparativement à ce qui est représenté sur la figure 2, et parce que les deux fils 20, 21 sont très proches l'un de l'autre, il n'y a plus réellement de lignes de courant passant dans le métal en fusion, mais il y a plutôt entre les extrémités des dits fils une jonction 25', faite de métal en état plus ou moins pâteux, qui assure la continuité électrique entre les deux fils. Cette jonction se régénère automatiquement en cours d'usage par figeage du métal en fusion au contact du revêtement réfractaire ou des éléments de tuyère entourant la sonde. En plus d'assurer la continuité électrique du circuit, cette jonction 25' se substitue aussi à la soudure chaude 25 originelle du thermocouple, pour assurer une fonction équivalente, c'est à dire que, si elle ne permet pas forcément d'obtenir une mesure précise de la température, elle en donne au moins une indication qui peut être utilisée pour corriger les valeurs de résistance mesurées, en tenant compte des éventuelles variations de résistivités du ou des fils en fonction de la température.

L'appareil de mesure 10 de la figure 4 comporte, schématiquement, un générateur de courant 101 et un voltmètre 102.

La mesure de tension V, sous une intensité I maintenue constante, permet d'en déduire la résistance R du circuit, ou les variations de résistance, et donc la longueur ou les variations de longueur des fils 20 ou 21 par R = V/I.

En ramenant à zéro l'intensité I délivrée par le générateur de courant 101, l'appareil de mesure fonctionne à la manière d'un thermocouple ordinaire et donne donc une valeur de tension V_{T} représentative de la température au niveau des extrémités de fils 20, 21.

On peut alors, en alternant dans le temps les mesures effectuées avec une intensité I prédéterminée et les mesures effectuées avec I=0 , d'une part, corriger la mesure de résistance pour tenir compte des variations de résistivité en fonction de la température estimée, comme indiqué ci-dessus, et d'autre part, corriger également la valeur de la tension V mesurée sous un courant généré I, pour tenir compte de la force électromotrice générée dans le circuit par l'effet Seebeck au niveau de la jonction 25'.

Un tel dispositif, qui est à la fois sonde de longueur et capteur de température, a sa plage de fonctionnement en température comprise entre 0 et 1370°C, ce qui couvre largement les besoins classiques dans le domaine sidérurgique particulièrement visé par l'invention. Avec un thermocouple classique chromel/alumel, la résistance linéaire de l'ensemble des deux fils en série est de l'ordre de 120 ohms/m.

La figure 5 représente une autre variante de réalisation utilisant également comme sonde un thermocouple de faible diamètre, mais qui se distingue par la constitution de l'appareil de mesure 10' et par les raccordements de celui-ci à la sonde.

Dans cette variante, les deux fils 20, 21 du thermocouple et la gaine 23 sont reliés à l'appareil de mesure. Un générateur de courant 111 et un premier voltmètre sont reliés à un des fils 21, et à la gaine 23, permettant de mesurer la résistance du circuit formé par ce fil 21 et la gaine 23, reliés électriquement à leurs extrémités via le métal en fusion, ou par la jonction de métal plus ou moins solidifié se formant entre le dit fil et la gaine. Un deuxième voltmètre 113 est connecté entre les deux fils 20, 21, et permet d'effectuer une évaluation de la température au niveau de la soudure chaude 25', pour corriger la mesure de résistance comme indiqué précédemment.

Des moyens de connexion, tels qu'un double interrupteur 114, permettent de court-circuiter temporairement les deux fils 20, 21. Dans ce cas, la mesure de résistance s'effectue en fait sur un circuit constitué par la gaine 23 en série avec les deux fils 20, 21 mis en parallèle, ce qui élimine toute influence perturbatrice de l'effet thermocouple lors de la mesure de la résistance. On garde cependant la possibilité de corriger la mesure de résistance pour tenir compte des éventuelles variations de résistivité de conducteurs en fonction de la température, mesurée lorsque l'interrupteur est ouvert.

Sur la figure 5, on a également représenté une variante de réalisation possible, selon laquelle au lieu d'utiliser la gaine 23 comme élément du circuit de mesure de résistance, on utilise un corps conducteur 27, par exemple un tube en alliage de cuivre, constituant la tuyère 6. Ce corps conducteur constitue une masse de retour reliée à l'appareil de mesure par un câble 28, représenté en pointillé sur la figure, au lieu du câble 29 y reliant la gaine du thermocouple. Cette variante peut également être utilisée dans le cas mentionné ci-dessus où les deux fils 20 et 21 sont reliés ensemble du côté de l'appareil de mesure. En reliant ainsi les extrémités des deux fils 20 et 21 juste à l'extrémité extérieure du thermocouple, on obtient alors un système très simple où le double interrupteur 114 peut être supprimé de même que le voltmètre 113 et que le câble de connexion 29.

Un avantage particulier de l'utilisation d'un thermocouple comme sonde de mesure est son coût relativement faible, et la possibilité de réaliser les mesures selon les diverses méthodes indiquées ci-dessus. On pourra toutefois également réaliser la sonde avec un seul conducteur central placé dans la gaine et isolé de celle-ci par un isolant pulvérulent, tel que de l'alumine en poudre, qui est compactée lors de l'étirage réalisé lors de la fabrication de la sonde, comme indiqué préalablement. On notera également que l'élément conducteur et résistif de la sonde n'est pas nécessairement le conducteur central, ou tout au moins que la gaine tubulaire peut également être réalisée dans un matériau ayant une résistivité électrique non négligeable, et participant donc également de manière significative à la variation de résistance lors de l'usure et de la diminution résultante de longueur de la gaine.

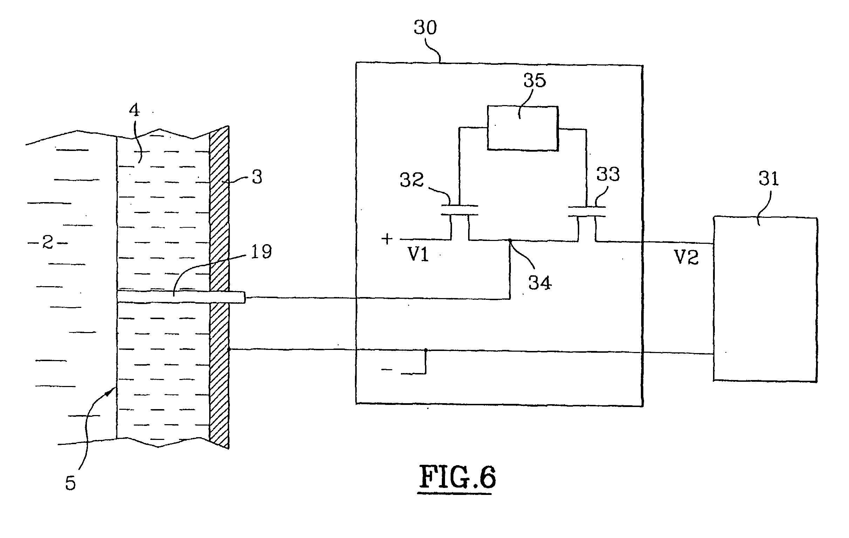

La figure 6 illustre le second mode de réalisation de l'invention, plus particulièrement destiné à être appliqué pour la mesure de l'usure de revêtement réfractaire dans des zones susceptibles de ne pas permettre la liaison électrique entre les extrémités des fils ou conducteurs de la sonde, telles que les zones de paroi se recouvrant rapidement d'une couche de laitier isolant 5' qui se renouvelle continuellement au fur et à mesure de l'usure du revêtement. Dans l'exemple représenté, les deux fils du thermocouple constituant la sonde sont reliés ensemble et reliés à un circuit 30 de traitement de signal destiné à mesurer la capacité naturelle entre ces deux fils et la gaine 23 en inconel du thermocouple. La gaine 23 est reliée à la masse. Le circuit 30 est lui-même relié à un calculateur 31 de détermination de la longueur de la sonde, et donc de l'épaisseur du revêtement réfractaire.

Le circuit 30 comporte deux transistors MOS 32, 33 dont une première borne est reliée à un point commun 34 sur lequel sont connectés les fils du thermocouple. Une deuxième borne du transistor 32 est reliée à une source de tension V₁, et une deuxième borne du transistor 33 est reliée au calculateur 31. Une horloge 35, fournissant un signal d'horloge par exemple à 20 MHz, pilote les deux transistors de manière que la capacité formée par les fils du thermocouple et la gaine soit alternativement chargée sous la tension V₁, au travers du transistor 32, et se décharge vers le circuit calculateur 31 à travers le transistor 33 sous une tension V₂. La capacité ainsi formée, commutée alternativement sous les potentiels des tensions V₁ et V₂, se comporte en quelque sorte comme une résistance équivalente dans le circuit allant de V₁ à V₂, dont la valeur est égale à R = 1/(C x fₕ) , où C est la capacité de la sonde et fₕ est la fréquence de l'horloge 35. La mesure, effectuée par le calculateur 31, de cette résistance, ou plus exactement du courant circulant dans le dit circuit, permet d'en déduire la capacité de la sonde, la résistance électrique entre les deux fils du thermocouple et la gaine étant considérée infinie. De là, on peut en déduire après étalonnage la longueur de la sonde et donc l'épaisseur du revêtement réfractaire 4. A titre d'exemple, pour une résistance équivalente mesurée de 50 Ohms, et avec une fréquence d'horloge de 20 MHz, la capacité est de 1 nF.

On notera un avantage particulier de la sonde de faible diamètre dans ce mode de réalisation, résidant dans le faible entrefer entre les armatures conductrices de la capacité mesurée, permettant d'en accroître autant que possible la valeur.

## Revendications

1. Dispositif de mesure en continu de l'usure d'une paroi (1) de récipient métallurgique, comportant :
- une sonde (19) qui comprend au moins deux éléments électriquement conducteurs (20, 21 ; 23) qui s'étendent sensiblement parallèlement à faible distance l'un de l'autre, et une gaine tubulaire (23), qui peut constituer l'un des dits éléments, et dans laquelle le ou les autres éléments (20, 21) s'étendent en étant isolés l'un de l'autre et de la dite gaine par un isolant réfractaire (24), la dite sonde étant adaptée pour être implantée transversalement dans la dite paroi, les deux éléments ayant une première extrémité affleurant à la surface intérieure (5) de la dite paroi, et
- des moyens de mesure (10, 10') connectés aux extrémités opposées des dits éléments, pour mesurer une caractéristique électrique du circuit formé par les dits éléments et dépendante de la longueur des dits éléments,
**caractérisé en ce que** la sonde a un diamètre inférieur à 1 mm, obtenu par un étirage global des différents éléments qui la constituent, après que ces éléments aient été assemblés sous une forme intermédiaire dans laquelle leur section est supérieure à leur section finale.

2. Dispositif selon la revendication 1, **caractérisé en ce que** la sonde a un diamètre inférieur à 0,5 mm.

3. Dispositif selon la revendication 1, **caractérisé en ce que** l'un au moins des deux dits éléments (20, 21) est réalisé en un matériau ayant une résistivité élevée suffisante pour que des variations de longueur des dits éléments conduisent à des variations de résistance électrique sensibles et mesurables, et les dits moyens de mesure sont des moyens de mesure de résistance électrique connectés aux extrémités opposées des dits éléments pour mesurer la résistance du circuit formé par les dits éléments et bouclé au niveau des premières extrémités (25') par le métal contenu dans le récipient.

4. Dispositif selon la revendication 3, **caractérisé en ce que** la sonde est formée par un thermocouple dont les deux fils (20, 21) constituent les deux dits éléments conducteurs.

5. Dispositif selon la revendication 3, **caractérisé en ce que** la sonde est formée par un thermocouple (19), et les moyens de mesure de résistance sont reliés entre les fils (20, 21) et la gaine (23) du thermocouple.

6. Dispositif selon la revendication 5, **caractérisé en ce que** les moyens de mesure (10') comportent des moyens de connexion (114) pour relier temporairement les deux fils du thermocouple.

7. Dispositif selon la revendication 1, **caractérisé en ce que** les moyens de mesure comportent des moyens de mesure (30, 31) de la capacité entre les éléments conducteurs de la sonde.

8. Procédé de mesure en continu de l'usure d'une paroi (1) de récipient métallurgique, **caractérisé en ce qu'**on utilise le dispositif selon la revendication 3 dans lequel la sonde est formée par un thermocouple, et on effectue des mesures de la résistance du circuit comportant au moins un des deux fils du thermocouple (20, 21) et des mesures de la force électromotrice générée par la jonction des extrémités de ces deux fils en contact avec le métal liquide (2) contenu dans le récipient, et on corrige les valeurs de résistance en fonction de la valeur de la dite force électromotrice.

9. Procédé selon la revendication 8, **caractérisé en ce qu'**on relie les moyens de mesure de la résistance aux deux fils du thermocouple et on effectue alternativement des mesures de la résistance du circuit formé par les deux fils du thermocouple (20, 21) et des mesures de la dite force électromotrice.

10. Procédé selon la revendication 8, **caractérisé en ce qu'**on effectue des mesures de la résistance du circuit formé par au moins un (21) des deux fils du thermocouple et la gaine (23), et des mesures de la dite force électromotrice.

## Claims

1. Device for continuously measuring the wear of a wall (1) of a metallurgical vessel, comprising:
- a probe (19) which includes at least two electrically conducting elements (20, 21; 23) which lie approximately parallel to one another and are a short distance apart, and a tubular sheath (23), which may constitute one of the said elements and in which sheath the other element or elements (20, 21) lie, while being insulated from one another and from the said sheath by a refractory insulation (24), the said probe being designed to be fitted transversely into the said wall, the two elements having a first end flush with the inner surface (5) of the said wall, and
- measurement means (10, 10') connected to the opposed ends of the said elements, in order to measure an electrical characteristic of the circuit formed by the said elements, the said characteristic being dependent on the length of the said elements,
**characterized in that** the probe has a diameter of less than 1 mm, obtained by collective drawing of the various elements which constitute it, after these elements have been assembled in an intermediate form in which their cross section is greater than their final cross section.

2. Device according to Claim 1, **characterized in that** the probe has a diameter of less than 0.5 mm.

3. Device according to Claim 1, **characterized in that** at least one of the two said elements (20, 21) is made of a material having a resistivity high enough for variations in the length of the said elements to result in appreciable and measurable electrical resistance variations, and the said measurement means are electrical resistance measurement means connected to the opposed ends of the said elements in order to measure the resistance of the circuit which is formed by the said elements and looped back at the first ends (25') by the metal contained in the vessel.

4. Device according to Claim 3, **characterized in that** the probe is formed by a thermocouple whose two wires (20, 21) constitute the said two conducting elements.

5. Device according to Claim 3, **characterized in that** the probe is formed by a thermocouple (19) and the resistance measurement means are connected between the wires (20, 21) and the sheath (23) of the thermocouple.

6. Device according to Claim 5, **characterized in that** the measurement means (10') include connection means (114) for temporarily connecting the two wires of the thermocouple.

7. Device according to Claim 1, **characterized in that** the measurement means comprise means (30, 31) for measuring the capacitance between the conducting elements of the probe.

8. Method for continuously measuring the wear of a wall (1) of a metallurgical vessel, **characterized in that** the device according to Claim 3, in which the probe is formed by a thermocouple, is used and measurements are made of the resistance of the circuit comprising at least one of the two wires of the thermocouple (20, 21) and measurements of the electromotive force generated by the junction of the ends of these two wires in contact with the liquid metal (2) contained in the vessel, and the resistance values are corrected according to the value of the said electromotive force.

9. Method according to Claim 8, **characterized in that** the resistance measurement means are connected to the two wires of the thermocouple and measurements of the resistance of the circuit formed by the two wires of the thermocouple (20, 21) and measurements of the said electromotive force are made alternately.

10. Method according to Claim 8, **characterized in that** measurements of the resistance of the circuit formed by at least one (21) of the two wires of the thermocouple and the sheath (23) and measurements of the said electromotive force are made.

## Patentansprüche

1. Vorrichtung zur kontinuierlichen Messung der Abnutzung einer Wand (1) eines metallurgischen Behälters, mit
- einer Sonde (19), die wenigstens zwei elektrisch leitende Teile (20,21;23) aufweist, die im wesentlichen in einem geringen Abstand voneinander parallel zueinander angeordnet sind, sowie eine rohrförmige Hülle (23) aufweist, die eines der Teile bilden kann, wobei das oder die beiden anderen Teile durch einen feuerfesten Isolator (24) voneinander und von der Hülle isoliert sind und wobei die Sonde dazu dient, in Querrichtung in die Wand eingesetzt zu werden, sodass die beiden Teile mit ihrem jeweils ersten Ende mit der Innenfläche (5) der Wand fluchten und mit
- einer Anordnung zur Messung (10,10'), die mit den gegenüberliegenden Enden der Teile verbunden ist um eine elektrische Eigenschaft des durch die Teile gebildeten Kreises zu messen, die von der Länge der Teile abhängt
**dadurch gekennzeichnet, dass** der Durchmesser der Sonde weniger als 1 mm beträgt und erhalten wird durch einen Gesamtziehvorgang der sie bildenden Bauteile, nachdem diese Bauteile zu einer Zwischenform zusammengefügt wurden, deren Querschnitt grösser als der endgültige Querschnitt ist.

2. Vorrichtung nach Anspruch 1, **dadurch gekennzeichnet, dass** der Durchmesser der Sonde weniger als 0,5 mm beträgt.

3. Vorrichtung nach Anspruch 1, **dadurch gekennzeichnet, dass** wenigstens eines der beiden Teile (20,21) aus einem Material besteht mit einer erhöhten Resistivität, die so gross ist, dass die Änderungen der Länge der Teile zu deutlichen und messbaren Änderungen des elektrischen Widerstandes führen und dass die Anordnung zur Messung eine Anordnung zur Messung des elektrischen Widerstandes ist, die mit den entgegengesetzten Enden der Teile verbunden ist zur Messung des Widerstandes des Kreises, der durch die Teile gebildet wird und auf Höhe der ersten Enden (25') durch das im Behälter vorhandene Metall geschlossen wird.

4. Vorrichtung nach Anspruch 3, **dadurch gekennzeichnet, dass** die Sonde aus einem Thermoelement besteht, dessen beide Drähte (20,21) die beiden leitenden Teile bilden.

5. Vorrichtung nach Anspruch 3, **dadurch gekennzeichnet, dass** die Sonde aus einem Thermoelement (19) besteht und dass die Anordnung zur Messung des Widerstandes zwischen die Drähte (20,21) und die Hülle (23) des Thermoelementes geschaltet ist.

6. Vorrichtung nach Anspruch 5, **dadurch gekennzeichnet, dass** die Anordnung zur Messung (10') eine Verbindungsanordnung (114) aufweist um die beiden Drähte des Thermoelementes zeitweise zu verbinden.

7. Vorrichtung nach Anspruch 1, **dadurch gekennzeichnet, dass** die Anordnung zur Messung eine Anordnung zur Messung (30,31) der Kapazität zwischen den leitenden Teilen der Sonde aufweist.

8. Verfahren zur kontinuierlichen Messung der Abnutzung einer Wand (1) eines metallurgischen Behälters, **dadurch gekennzeichnet, dass** die Vorrichtung nach Anspruch 3 verwendet wird, bei der die Sonde aus einem Thermoelement besteht und dass Messungen durchgeführt werden des Widerstandes des Kreises, der wenigstens einen der beiden Drähte (20,21) des Thermoelementes enthält sowie Messungen der elektromotorischen Kraft, die durch die Verbindung der Enden dieser beiden Drähte bei Berührung mit dem im Behälter vorhandenen flüssigen Metall (2) erzeugt wird und dass die Werte für den Widerstand als Funktion des Wertes für die elektromotorische Kraft korrigiert werden.

9. Verfahren nach Anspruch 8, **dadurch gekennzeichnet, dass** die Anordnung zur Messung des Widerstandes mit den beiden Drähten des Thermoelementes verbunden wird und dass abwechselnd Messungen des Widerstandes des durch die beiden Drähte (20,21) des Thermoelementes gebildeten Kreises und der elektromotorischen Kraft durchgeführt werden.

10. Verfahren nach Anspruch 8, **dadurch gekennzeichnet, dass** Messungen des Widerstandes des durch wenigstens einen (21) der beiden Drähte des Thermoelementes und die Hülle (23) gebildeten Kreises sowie Messungen der elektromotorischen Kraft durchgeführt werden.
